# EUROPEAN PATENT APPLICATION

(11) **EP 4 809 828 A1**
(43) Date of publication of application: **23.09.2026**
(21) Application number: 26156995.8
(22) Date of filing: 06.02.2026
(51) Int. Cl.: A23G 1/18, A23G 3/02

(54) **RECIRCULATION DEVICE**

(30) Priority: 17.03.2025 IT 202500005391
(71) Applicant: Selmi S.r.l., 12042 BRA (CN) (IT)
(72) Inventor: SELMI, Paolo, I-12042 Bra (Cuneo) (IT)
(74) Representative: Buzzi, Notaro & Antonielli d'Oulx S.p.A.

(57) **Abstract**

A recirculation device (10) is described for connecting together a first preparation machine (100) for the preparation and/or treatment of a fluid ingredient, for example chocolate, and a second production machine (200) for the production of a food product through the use of the fluid ingredient.

The recirculation device comprises:
- a first and a second conduit (20, 22);
- a distribution unit (40) fixed to respective first ends (20A, 22A) of said first and second conduit (20, 22),
- a thermoregulated plate (60); and
- a quick-attach system (70, 72) for fixing said first and second conduit (20, 22) to said thermoregulated plate (60).

## Description

The present invention relates to a recirculation device to be used in the production of food products, particularly confectionery products, to feed and recirculate a fluid ingredient that must be supplied from a first preparation machine for the preparation and/or treatment of the fluid ingredient to a second production machine for the production of a food product through the use of the fluid ingredient.

In particular, the recirculation device described herein is intended for small-scale production environments, such as artisanal workshops or small industrial manufacturing facilities.

In general, the present invention relates to a recirculation device according to claim 1 and a method according to claim 10.

As will be detailed below, the recirculation device described herein allows for a simple and quick operational connection between the aforementioned preparation machine and production machine and provides for the effective feeding of the fluid ingredient from the first to the second machine.

The claims form an integral part of the teaching provided herein.

Further features and advantages of the present invention will become apparent from the following description with reference to the attached drawings, provided purely by way of non-limiting example, wherein:
- figure 1 represents an example of the recirculation device described herein;
- figure 2 represents a part of the recirculation device of figure 1 in a partially exploded view;

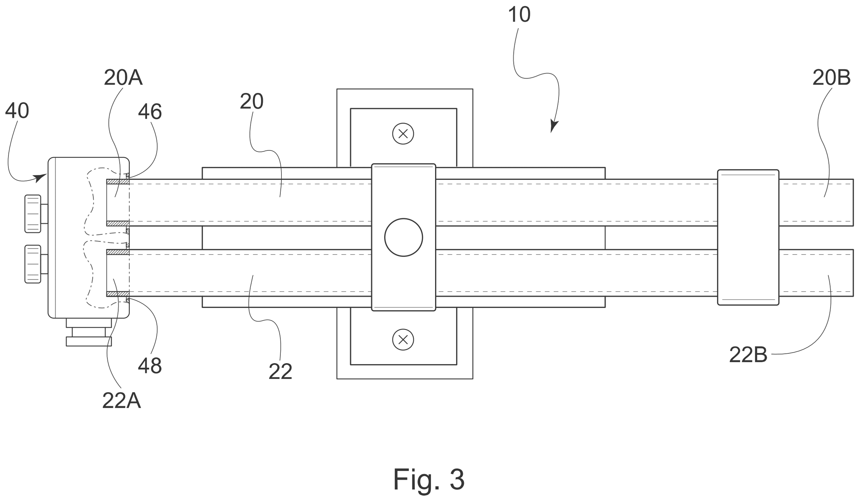

- figure 3 is a top view of the device of figure 1;
- figure 4 illustrates an example of application of the device of figure 1.

In the following description, various specific details are illustrated to provide a thorough understanding of the embodiments. The embodiments can be carried out without one or more of the specific details, or with other methods, components, or materials, etc. In other cases, known structures, materials, or operations are not shown or described in detail to avoid obscuring various aspects of the embodiment.

The references used herein are for convenience only and thus do not define the scope of protection or the extent of the embodiments.

As mentioned above, the recirculation device described herein - overall indicated in the figures with reference number 10 - serves to connect a first preparation machine for the preparation and/or treatment of a fluid ingredient, to a second production machine for the production of a food product through the use of the fluid ingredient.

An example of application of the recirculation device described herein concerns the production of confectionery products and, in particular, the creation of a chocolate feeding and recirculation line that connects a tempering machine and a chocolate molding machine.

The molding machine may, for example, be a dosing machine for dosing chocolate into molds, or an extrusion machine for the production of extruded confectionery products containing a chocolate filling.

Although the recirculation device is described herein with specific reference to chocolate, it is also applicable to a wide range of other fluid ingredients, including creams, jams, anhydrous pastes, ice creams, sorbets, and praline mixtures. In particular, the device can be used both for ingredients that require heating, such as melted chocolate or certain pastry creams, and for ingredients that need to be cooled or kept at a temperature lower than room temperature, as in the case of ice creams and sorbets.

The versatility of the device thus allows for the optimization of production processes in various sectors of the food industry, ensuring efficient temperature control and continuous feeding of fluid ingredients between the preparation and production machines. This feature is particularly advantageous in the sectors of artisanal pastry and ice cream making, where the need to manage ingredients at different temperatures is of fundamental importance to obtain high-quality products.

The aforementioned first preparation machine may therefore be, for example, a machine for the preparation of ice cream base, and the aforementioned second production machine may be, for example, an ice cream molding machine.

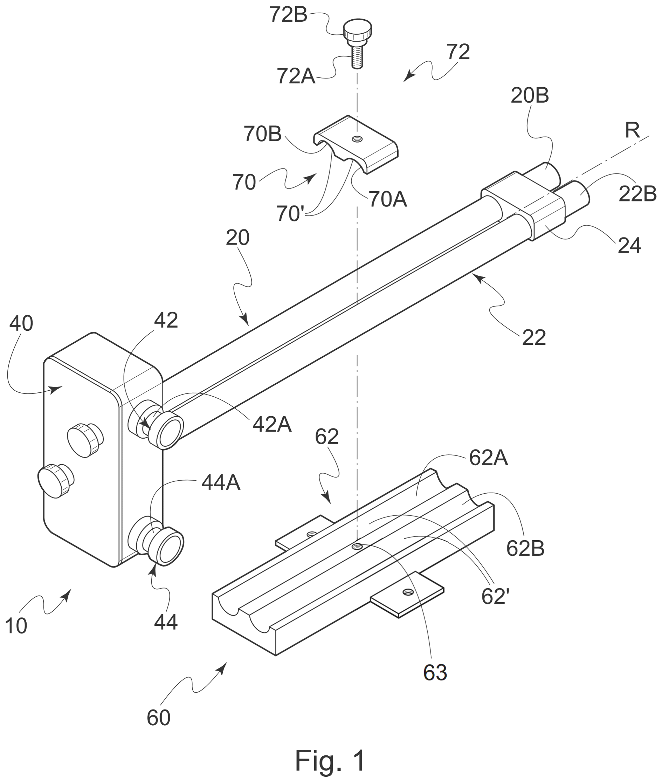

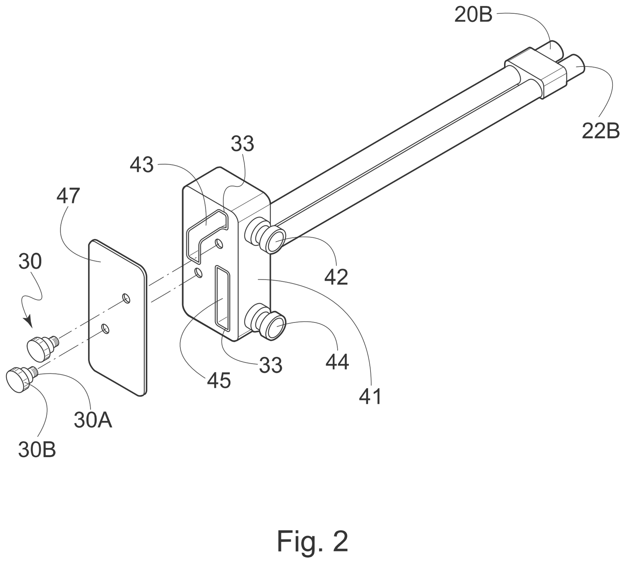

Referring to figures 1 and 2, the recirculation device 10 comprises two conduits 20, 22, preferably of equal length, which extend parallel along a reference axis R, and which are rigidly connected together in such an arrangement that they present their respective opposite ends aligned with each other along a transverse direction to the reference axis R, and are placed at a predefined mutual distance along the same direction.

For reasons that will be discussed later, both conduits 20, 22 are made of thermally conductive material, for example aluminum.

In one or more preferred embodiments, such as the one illustrated, the recirculation device 10 particularly includes a joint 24, which engages the two conduits at an intermediate position of their length and rigidly connects them together in the above-mentioned arrangement.

In one or more preferred embodiments, such as the one illustrated, the recirculation device 10 includes a distribution unit 40, which is fixed to the ends 22A, 24A of the two conduits 22, 24 and is supported by them.

The ends 20B, 22B of the two conduits 22, 24, opposite to the ends 22A, 24A, are instead free and open, for reasons that will become evident later.

In one or more preferred embodiments, such as the one illustrated, the distribution unit 40 includes an inlet 42 configured to be connected and placed in fluid communication with a feed conduit of the first preparation machine, and an outlet 44 configured to be connected and placed in fluid communication with a return conduit of the first preparation machine.

Furthermore, the distribution unit 40 includes an opening 46, into which the end 20A of the conduit 20 is inserted, and a second opening 48, into which the end 22A of the conduit 22 is inserted.

The distribution unit 40 is configured to place the inlet 42 in fluid communication with the end 20A of the conduit 20, and the outlet 44 in fluid communication with the end 22A of the conduit 22.

In one or more preferred embodiments, such as the one illustrated, the distribution unit 40 includes a box-shaped body 41 provided with a first cavity 43 configured to place the inlet 42 in fluid communication with the end 20A of the conduit 20, and a second cavity 45 configured to place the outlet 44 in fluid communication with the end 22A of the conduit 22.

In one or more preferred embodiments, such as the one illustrated, the distribution unit 40 also includes a cover 47 that is removably fixed to the box-shaped body 41 by means of quick fastening members 30.

Preferably, each fastening member 30 includes a threaded pin 30A fixed to a knob 30B configured for manual grip by an operator.

The box-shaped body 41 includes fastening holes 41A configured to receive the pins 31A of the quick fastening members 30.

In one or more preferred embodiments, such as the one illustrated, respective gaskets 33 are placed along the upper peripheral edges of the cavities 43, 45 to achieve an airtight closure of such cavities with respect to the outside, when the cover 47 is fixed to the box-shaped body 41 and presses against it.

In one or more preferred embodiments, such as the one illustrated, in the distribution unit 40, the inlet 42 is placed above the outlet 44 and spaced vertically from it so as to define a certain hydraulic head between the inlet 42 and the outlet 44, when the recirculation device 10 is connected to the first and second machine.

On the other hand, the two conduits 20, 22 lie on the same horizontal plane, which is located in a vertical intermediate position between the inlet 42 and the outlet 44.

In one or more preferred embodiments, such as the one illustrated, the inlet 42 and the outlet 44 are both configured to allow their rapid connection, respectively, with the feed conduit and the return conduit, mentioned above, of the first preparation machine.

In one or more preferred embodiments, such as the one illustrated, the inlet 42 and the outlet 44 each include a respective hydraulic connector 42A/44A equipped with a shaped outer surface configured to interact with a releasable locking system provided both on the feed conduit and on the return conduit, which releasably fixes the respective conduit to the inlet 42 or the outlet 44.

In one or more preferred embodiments, such as the one illustrated, the recirculation device 10 further comprises a thermoregulated plate 60, which includes a seat 62 configured to receive the two conduits 20, 22.

At least one thermal conditioning surface delimits the seat 62 and comes into contact with the two conduits 20, 22, in a thermal exchange condition with them, when they are received within the seat 62.

In one or more preferred embodiments, such as the one illustrated, the seat 62 includes two distinct cavities 62A, 62B for housing the two conduits 20, 22, each delimited by a cylindrical surface 62' extending along the entire length of the plate 60 and having a substantially complementary shape to that of the conduit it is intended to receive.

The surface 62' of each cavity constitutes a thermal conditioning surface of the seat 62.

Its cylindrical configuration favors thermal exchange with the respective conduit.

In one or more preferred embodiments, the thermoregulated plate 60 includes a thermal conditioning system to thermally condition each thermal conditioning surface 62' of the seat 62, a sensor (not illustrated) for detecting a temperature value indicative of the temperature of the thermal conditioning surface 62', and a control unit (not illustrated) configured to control the thermal conditioning system based on the temperature value detected by the sensor.

In a preferred embodiment, the thermal conditioning system includes an electric resistance (not illustrated) that is inserted within a seat created in the thermoregulated plate 60 and is in a thermal exchange condition with each thermal conditioning surface 62' of the seat 62.

In an alternative embodiment, the thermal conditioning system may instead comprise a Peltier cell.

In general, the thermal conditioning system can be configured to heat or cool, or selectively both heat and cool, the thermal conditioning surface 62'.

The thermal conditioning system may include, for example, the aforementioned electric resistance, induction heating means, a fluid refrigeration circuit (for example, with glycol mixtures), a heat pump circuit (operable selectively both for heating and for cooling), a Peltier cell, etc.

Preferably, the thermoregulated plate 60 comprises a main body made of a thermally conductive material, for example aluminum, on which the seats 62A and 62B are created and which carries the thermal conditioning system, for example the aforementioned electric resistance.

In one or more preferred embodiments, such as the one illustrated, the thermoregulated plate 60 includes fastening holes configured to allow the plate to be fixed to a structure of the second production machine. In the example illustrated, the thermoregulated plate 60 includes two lateral flanges projecting in opposite directions from the main body and equipped with fastening holes for fixing the plate to the structure of the second production machine.

In general, the plate may include various types of formations (for example, the flanges and fastening holes mentioned above or equivalent formations) for fixing to the structure of the second production machine, depending on the needs of specific applications.

Furthermore, in one or more preferred embodiments, such as the one illustrated, the recirculation device 10 includes a quick-attach system for fixing the two conduits 20, 22 to the thermoregulated plate 60.

In one or more preferred embodiments, such as the one illustrated, this quick-attach system includes a removable bracket 70 configured to clamp the two conduits 20, 22 against their respective thermal conditioning surfaces 62' of the seat 62.

In one or more preferred embodiments, such as the one illustrated, the bracket 70 is equipped, on its inner side, with two cavities 70A, 70B for housing the two conduits 20, 22, each delimited by a cylindrical surface 70' extending along the reference axis R and presenting a complementary shape to the part of the respective conduit it is intended to receive.

The surface 70' of each cavity is a pressure surface that serves to press the conduit 20 or 22 against the respective thermal conditioning surface 62', in order to prevent, by friction, the conduit from slipping off the surface, once the bracket 70 is fixed to the thermoregulated plate 60.

In this regard, in one or more preferred embodiments, such as the one illustrated, the quick-attach system further includes a fastening member 72, which is manually operable and is configured to fix the bracket 70 to the thermoregulated plate 60.

In one or more preferred embodiments, such as the one illustrated, the fastening member 72 includes a threaded pin 72A fixed to a knob 72B configured for manual grip by an operator; in this case, preferably, the thermoregulated plate 60 includes a threaded hole 63 configured to receive the threaded pin 72A.

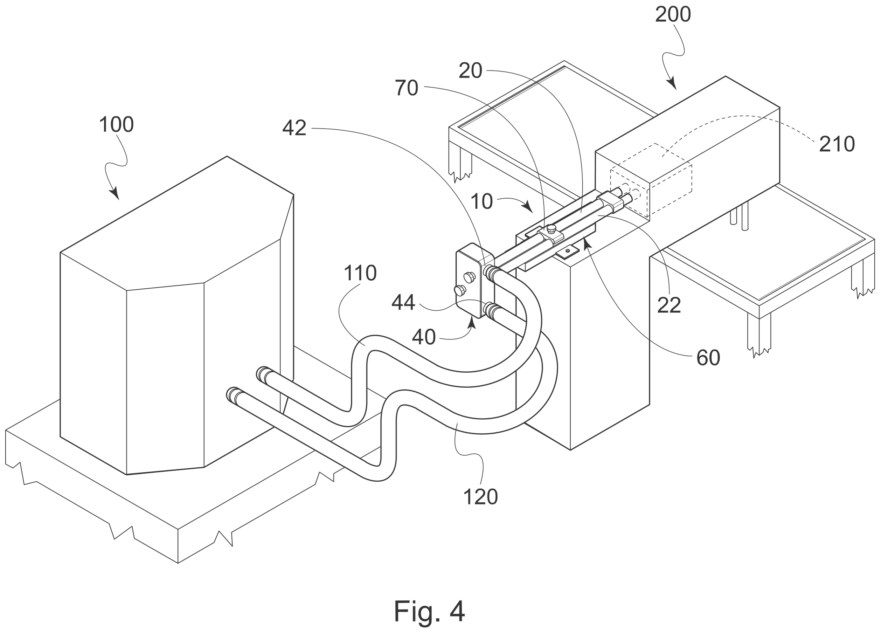

Referring now to figure 4, this illustrates an example of application where the recirculation device 10 is employed to create a chocolate feeding and recirculation line that connects a first chocolate tempering machine 100 to a second dosing machine 200 for molding chocolate within molds.

The installation of the recirculation device 10 for such an application involves, first of all, fixing the thermoregulated plate 60 to a structure of the dosing machine 200 in proximity to a chocolate collection chamber 210, where chocolate is collected before it is fed to the nozzles of the machine.

Subsequently, the assembly consisting of the two conduits 20, 22 and the distribution unit 40 is positioned on the thermoregulated plate 60, so that the two conduits 20, 22 are arranged on the thermal conditioning surfaces 62' and their free ends 20B, 22B are inserted into the collection chamber 210; in this regard, as known per se, the machine 200 may include an opening through which it is possible to access, from the outside, the inside of the collection chamber 210.

Once positioned correctly, the two conduits 20, 22 are anchored to the thermoregulated plate 60 via the bracket 70 and the fastening member 72.

Finally, the distribution unit 40 is connected to the chocolate feeding system of the tempering machine 10 by coupling the inlet 42 with a feed conduit 110 of the tempering machine 100, and by coupling the outlet 44 with a return conduit 120 of the same tempering machine.

In the operation of the production line thus created by connecting the tempering machine 100 and the dosing machine 200 in the manner illustrated above, the chocolate fed by the tempering machine 100 travels through the feed conduit 110, through the distribution unit 40 is sent to the conduit 20 and through this reaches the collection chamber 210 of the dosing machine 200.

The amount of chocolate in excess of what can be retained by the dosing machine 200, within the collection chamber 210, returns to the tempering machine 100 through the conduit 22, the distribution unit 40, and the return conduit 120.

The pressure necessary for the generation of such a return flow of chocolate, from the collection chamber 220 of the dosing machine 200 to the tempering machine 100, is guaranteed by the pressure generated by the feeding system of the tempering machine 100; moreover, the hydraulic head discussed earlier, which is determined by the reciprocal arrangement of the inlet 42 and the outlet 44, helps to support this return flow of chocolate.

In the meantime, the thermoregulated plate 60 operates to maintain the chocolate flowing in the conduits 20 and 22 at a predefined temperature.

In this way, the recirculation device 10 assists the tempering machine 100 in making chocolate at the preset temperature immediately available, at any time, to the dosing machine 200.

In light of the above, the ease of use of the recirculation device described herein and the benefits in terms of production quality and efficiency derivable from its use in a food product production process are therefore evident.

Of course, while the principle of the invention remains the same, the details of implementation and the embodiments may vary, even significantly, with respect to what is illustrated herein by way of non-limiting example, without thereby departing from the scope of the invention, as defined by the attached claims.

## Claims

1. Recirculation device (10) for connecting together a first preparation machine (100) for the preparation and/or treatment of a fluid ingredient, for example chocolate, and a second production machine (200) for the production of a food product through the use of the fluid ingredient, said recirculation device comprising:
- a first and a second conduit (20, 22) that extend parallel to each other along a reference axis (R) and are rigidly connected together, wherein said first conduit (20) is configured to feed the fluid ingredient to the second production machine (200), and wherein said second conduit (22) is configured to return the unused fluid ingredient to the first preparation machine (100);
- a distribution unit (40) fixed to respective first ends (20A, 22A) of said first and second conduit (20, 22),
said distribution unit (40) comprising an inlet (42) configured to be connected to a feed conduit (110) of the first preparation machine (100) and placed in fluid communication with said first conduit (20), and an outlet configured to be connected to a return conduit (120) of the first preparation machine and placed in fluid communication with said second conduit (22),
- a thermoregulated plate (60) comprising at least one formation for fixing said thermoregulated plate to a structure of said second machine (200);
wherein said thermoregulated plate (60) includes a seat (62) for housing said first and second conduit (20, 22), which is delimited by at least one thermal conditioning surface (62') configured to be in a thermal exchange condition with said first and second conduit (20, 22), when they are received in said seat (62);
- a quick-attach system (70, 72) for fixing said first and second conduit (20, 22) to said thermoregulated plate (60).

2. Device according to claim 1, wherein said quick-attach system comprises a removable bracket (70) configured to clamp said first and second conduit against said thermal conditioning surface (62'), and a manually operable fastening member (30), which is configured to fix said bracket (70) to said thermoregulated plate (60).

3. Device according to claim 1 or 2, wherein said first and second conduit (20, 22) are both rigid and made of a thermally conductive material.

4. Device according to any of the preceding claims, comprising a joint (24) configured to rigidly connect together said first and second conduit (20, 22) in a predefined arrangement wherein said first and second conduit (20, 22) present respective second ends (20B, 22B) aligned along a transverse direction to said reference axis (R) and wherein said first and second conduit (20, 22) are disposed at a given mutual distance along such transverse direction to said reference axis (R).

5. Device according to any of the preceding claims, wherein, in said distribution unit, said inlet (42) is placed above said outlet (44) and is vertically spaced from it so as to define a certain hydraulic head between said inlet (42) and said outlet (44), when said recirculation device (10) is connected to said first and second machine (100, 200).

6. Device according to claim 5, wherein said first and second conduit (20, 22) lie on the same horizontal plane which is located in a vertical intermediate position between said inlet (42) and said outlet (44).

7. Device according to any of the preceding claims, wherein said first and second conduit (20, 22) include respective second ends (20B, 22B) that are free and open, which are configured to be simultaneously inserted inside a collection chamber (210) of the fluid ingredient of the second production machine (200).

8. Device according to any of the preceding claims, wherein the thermoregulated plate (60) includes a thermal conditioning system to thermally condition said thermal conditioning surface (62') of said seat (62), a sensor for detecting a temperature value indicative of the temperature of the thermal conditioning surface (62'), and a control unit configured to control the thermal conditioning system based on the temperature value detected by the sensor.

9. Device according to claim 8, wherein said thermal conditioning system comprises at least one among an electric resistance, a Peltier cell, a fluid refrigeration circuit, a heat pump circuit, an induction heating device, which is placed in a thermal exchange condition with said thermal conditioning surface (62') of said seat (62).

10. Method for connecting a first preparation machine (100) for the preparation and/or treatment of a fluid ingredient, for example chocolate, to a second production machine for the production of a food product through the use of the fluid ingredient,
said method comprising:
- providing a recirculation device (10) according to any of the preceding claims;
- fixing the thermoregulated plate (60) to a structure of said second production machine (200) in proximity to a collection chamber (210) of the fluid ingredient of said second production machine (200);
- arranging said first and second conduit (20, 22) in the seat of said thermoregulated plate and in such an arrangement that second ends (20B, 22B) of said first and second conduit (20, 22), opposite to said first ends (20A, 22A), are inserted inside said collection chamber (210);
- using said quick-attach system to fix said first and second conduit (20, 22) to the thermoregulated plate (60) ;
- connecting the inlet (42) of the distribution unit (40) to a feed conduit (110) of the first preparation machine (100);
- connecting the outlet (44) of the distribution unit (40) to a return conduit (120) of the first preparation machine (100).
